# EUROPEAN PATENT APPLICATION

(11) **EP 4 760 292 A1**
(43) Date of publication of application: **17.06.2026**
(21) Application number: 25204269.2
(22) Date of filing: 24.09.2025
(51) Int. Cl.: G01R 31/367, G01R 31/382, G01R 31/396, G06F 18/15, G06N 3/08, G01R 31/392

(54) **APPARATUS AND METHOD FOR ESTIMATING DATA GAP**

(30) Priority: 12.12.2024 KR 20240184824
(71) Applicant: SAMSUNG SDI CO., LTD., Yongin-si, Gyeonggi-do 17084 (KR)
(72) Inventor: SEONG, Junghyun, 17084 Yongin-si (KR); AHN, Taesung, 17084 Yongin-si (KR); LEE, Changhyun, 17084 Yongin-si (KR); LEE, Hyeongmin, 17084 Yongin-si (KR)
(74) Representative: Marks & Clerk LLP

(57) **Abstract**

Provided are an apparatus and method for estimating a data gap. The method is performed by a processor of the apparatus (150) for estimating a data gap and includes collecting pieces of time series data related to batteries from battery management systems (210) which are provided in a plurality of devices (200) using the batteries as power sources and which monitor states of the batteries, determining a device in which data is missing in a random time period and thus a data gap duration occurs, as a target device (200_1) from among the plurality of devices (200), generating estimated data regarding the data gap duration occurring in the target device (200_1), and providing the target device (200_1) with a result of generating the estimated data regarding the data gap duration.

## Description

### FIELD

The disclosure relates to an apparatus and method for estimating a data gap.

### BACKGROUND

Battery management systems (BMSs) may be used to monitor and manage conditions of battery packs in various application fields such as electric vehicles, portable electronic devices, and energy storage systems (ESS). BMSs may detect currents, voltages, temperatures, and the like of batteries in real time, and on the basis of the same, diagnose conditions of the batteries and predict lives of the batteries. In addition, the BMSs may detect dangerous situations such as overcharging, over-discharging, and overheating of the batteries to ensure safety and optimize battery performance.

The BMSs may be generally connected to central data processing units and may transmit data through wireless communication functions to analyze collected data and take needed actions. However, the BMSs may have limitations in effective data collection and processing according to changes in use environments and operating conditions of the batteries, and in particular, missing data may occur due to unstable network environments or hardware errors, during data transmission. The herein issues may be significant obstacles for the BMSs to provide accurate battery state information.

The information described herein in the background art of the disclosure is only intended to improve understanding of the background of the disclosure and therefore may include information that does not constitute related art.

### SUMMARY

The disclosure is to quickly detect a gap occurring in battery-related data collected from a device that uses a battery as a power source and to effectively estimate the corresponding gap.

However, the technical problems to be solved by the disclosure are not limited to the problems described herein, and other problems not mentioned may be clearly understood by those skilled in the art from the description of the disclosure described herein.

According to embodiments, a method of estimating a data gap is performed by a processor of an apparatus for estimating a data gap and includes collecting pieces of time series data related to batteries from battery management systems (BMSs) which are provided in a plurality of devices using the batteries as power sources and which monitor states of the batteries, on a basis of the collection of the pieces of time series data, determining a device in which data is missing in a random (e.g. arbitrary or unexpectedly) time period and thus a data gap duration occurs, as a target device from among the plurality of devices, generating estimated data regarding the data gap duration occurring in the target device, on a basis of pieces of time series data collected before the data gap duration occurs in non-target devices excluding the target device from among the plurality of devices and pieces of time series data collected after the data gap duration occurs, and providing the target device with a result of generating the estimated data regarding the data gap duration.

According to embodiments, an apparatus for estimating a data gap includes one or more processors, and a memory operatively connected to the processors and storing at least one code executed by the processors, wherein the processors are configured to collect pieces of time series data related to batteries from battery management systems (BMSs) which are provided in a plurality of devices using the batteries as power sources and which monitor states of the batteries, on a basis of the collection of the pieces of time series data, determine a device in which data is missing in a random (e.g. arbitrary or unexpectedly) time period and thus a data gap duration occurs, as a target device from among the plurality of devices, generate estimated data regarding the data gap duration occurring in the target device, on a basis of pieces of time series data collected before the data gap duration occurs in non-target devices excluding the target device from among the plurality of devices and pieces of time series data collected after the data gap duration occurs, and provide the target device with a result of generating the estimated data regarding the data gap duration.

In addition, another method for implementing the disclosure, another system, and a computer-readable recording medium having stored therein a program for executing the method may be further provided.

Other aspects, features and advantages other than those described herein will become apparent from the following drawings, claims and detailed description of the disclosure.

At least some of the above and other features of the invention are set out in the claims.

### BRIEF DESCRIPTION OF THE DRAWINGS

The following drawings attached to the description illustrate embodiments and make the scope of the disclosure to be further understood together with the detailed description of the disclosure described herein, and thus, the disclosure should not be construed as being limited to the matters described in the drawings in which:
FIG. 1 is an example view of a data gap estimation environment according to embodiments;
FIG. 2 illustrates components of a data gap estimation apparatus according to embodiments;
FIGS. 3 and 4 illustrate components of a gap estimation manager and a device, according to embodiments;
FIGS. 5A and 5B illustrate a waveform diagram of a data gap duration and a waveform diagram reflecting the result of generating estimated data regarding the data gap duration, according to embodiments;
FIG. 6 illustrates components of a data gap estimation apparatus according to embodiments; and
FIG. 7 is a flowchart illustrating a data gap estimation method according to embodiments.

### DETAILED DESCRIPTION

Hereinafter, embodiments are described in detail with reference to the attached drawings. Prior to the same, the terms or words used in the description and claims should not be interpreted as being limited to common or dictionary meanings, and should be interpreted as meanings and concepts that conform to the scope of the disclosure on the basis of the principle that the inventor may appropriately define the concepts of the terms to describe his or her own disclosure in the best way. Therefore, embodiments described in the description and components illustrated in the drawings are only some of embodiments and do not represent the entire scope of the disclosure, and thus, it should be understood that various equivalents and modified examples capable of replacing the same may be made at the time of filing the present application. In addition, as used herein, "comprise, include" and/or "comprising, including" specify the presence of the aforementioned shapes, numbers, steps, operations, members, elements, and/or groups thereof, and do not exclude the presence or addition of one or more other shapes, numbers, operations, members, elements, and/or groups. In addition, "~ may" and "~ may be" may include "one or more embodiments of the disclosure" when describing embodiments.

Also, to help understand the disclosure, the attached drawings are not illustrated at the actual scale, but the dimensions of some components may be exaggerated. In addition, the same reference numerals may be assigned to the same components in different embodiments.

The reference that two targets to be compared are "the same" means "substantially the same". Therefore, the term "substantially the same" may include deviations considered to be low in the art, e.g., deviations within 5 %. In addition, uniformity of any parameter in a certain area may mean that the parameter is uniform from an average point of view.

Although the terms first, second, etc. are used to describe various components, these components are not limited by these terms. These terms are only used to distinguish one component from another, and unless otherwise stated, a first component may also be a second component.

Throughout the description, each component may be singular or plural unless particularly opposed to the description.

Any component being arranged "above (or under)" a component or "on (or underneath) the component may mean that any component is not only arranged in contact with an upper surface (or a lower surface) of the component, but also another component may intervene between the component and any component disposed on (or underneath) the component.

It should also be understood that, in the case where a component is stated to be "coupled to", "combined with", or "connected to" another component, the components may be directly coupled or connected to each other, but another component may "intervene" between the respective components, or the respective components may be "coupled to", "combined with", or "connected to " each other through another component. In addition, when a part is referred to as being electrically coupled to another part, it includes not only the case where the part is directly coupled to the other part, but also the case where the part and the other part are coupled to each other with another element in between.

When referred to as "A and/or B" throughout the description, it means A or B, or A and B unless otherwise stated to the contrary. In other words, the term "and/or" includes any and all combinations of one or more of the associated listed items. When it comes to "C to D", it means that it is greater than or equal to C and less than or equal to D unless otherwise stated in opposition.

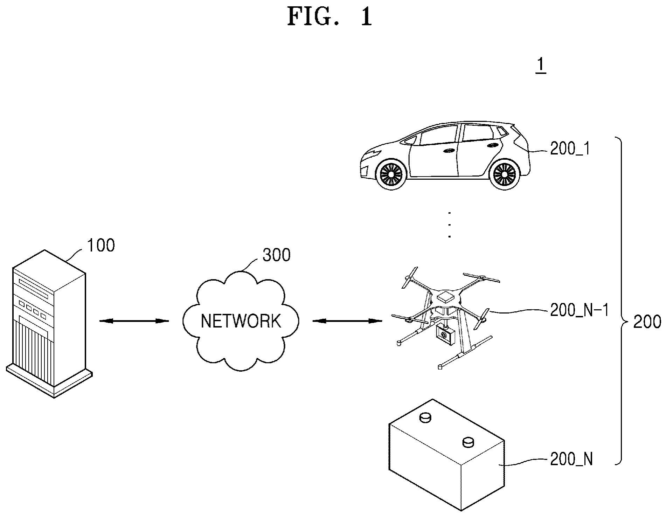

FIG. 1 is an example view of a data gap estimation environment according to embodiments. Referring to FIG. 1, a data gap estimation environment 1 may include a data gap estimation apparatus 100, a plurality of devices 200, and a network 300.

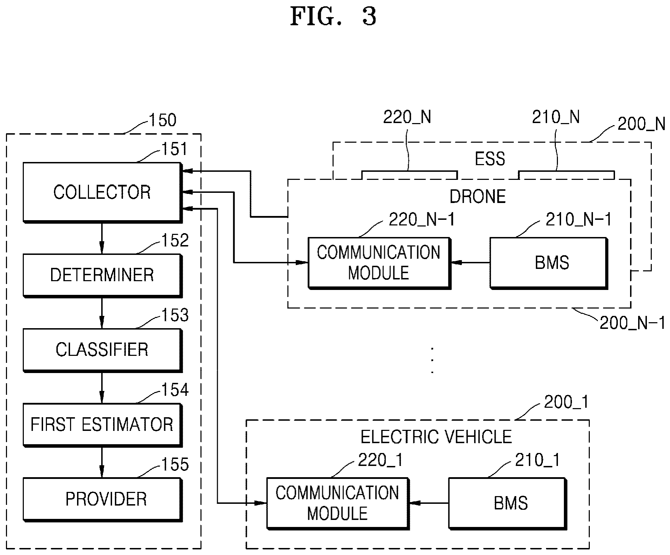

The data gap estimation apparatus 100 is configured to collect pieces of time series data related to batteries from battery management systems (BMSs) 210 (210_1, ..., 210_N-1, and 200_N of FIG. 3) provided in the plurality of devices 200 (200_1, ..., 200_ N-1, and 200_N of FIG. 3). In the present embodiment, the data gap estimation apparatus 100 may periodically (e.g., 0.1 second, 1 second, 1 minute, or the like) collect the pieces of time series data related to the batteries.

In the present embodiment, data related to a battery may include a portion of the result of monitoring a state of the battery by the BMS 210 of FIG. 3. The data related to the battery may include, for example, one or more of a current, a voltage, and a temperature of the battery. In addition, time series data may include data sequentially observed or recorded over time. Accordingly, the time series data related to the battery may include information regarding a current, a voltage, and a temperature of the battery, which are recorded sequentially over time. Hereinafter, the time series data related to the battery may be interpreted as the same signification as time series data. In other words, the time series data related to the battery and the time series data may be interpreted as time series data related to the battery.

In addition, the time series data related to the battery may further include device model information and specification information regarding a battery provided in each of the plurality of devices 200. The device model information may include information identifying each device and indicating that each device belongs to a particular manufacturer and product line. The device model information may be set by the manufacturer and may represent functional and performance features of the device. The specification information regarding the battery may include technical details including a capacity, a voltage, the maximum charging time, a chemical composition, a charging period, and the like of the battery provided in each of the plurality of devices 200. Battery specifications as described herein may be significant factors in determining a usable time, performance, safety, and overall energy efficiency of each device.

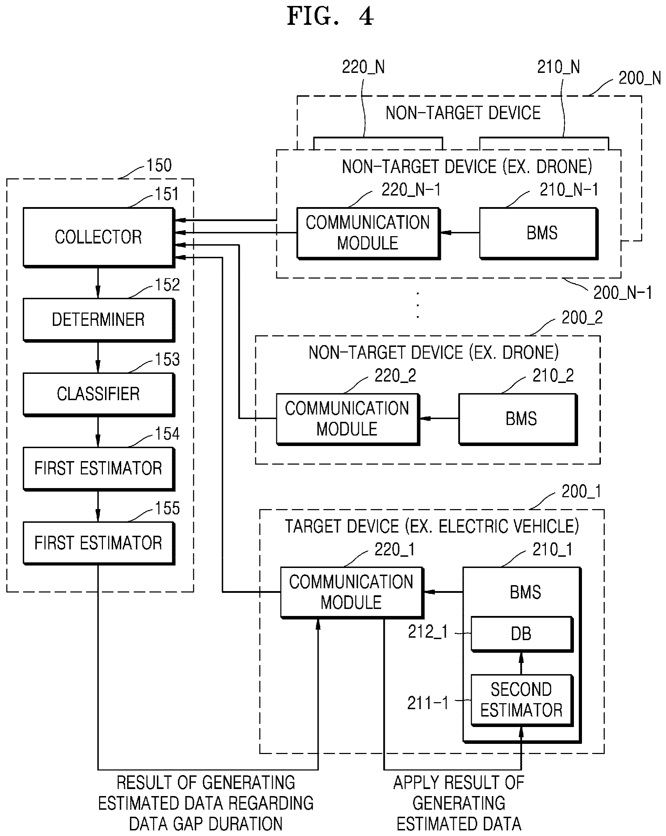

The data gap estimation apparatus 100 may determine, as a target device 200-1 of FIG. 4 on the basis of the collection of the pieces of time series data related to the batteries, a device in which data is missing in a random time period and thus a data gap duration occurs, from among the plurality of devices 200 (200_1, ..., and 200_N). In the present disclosure, to state that data is missing in a "random" time period is not intended to imply any random determination of the time period, merely that the time period is for example, arbitrary, or unexpected. The data gap estimation apparatus 100 may determine devices in which data gap durations do not occur from among the plurality of devices 200 (200_1, ..., and 200_N) as non-target devices 200_2, ..., and 200_N of FIG. 4. The data gap estimation apparatus 100 may determine the target device 200_1 of FIG. 4 and the non-target devices 200_2, ..., and 200_N of FIG. 4 by checking a log or a time stamp of the time series data related to the batteries, which are collected from the plurality of devices 200 (200_1, ..., and 200_N).

The data gap estimation apparatus 100 is configured to generate estimated data regarding the data gap duration occurring in the target device 200_1 of FIG. 4, on the basis of pieces of time series data collected before data gap durations occur in the non-target devices 200-2, ..., and 200_N of FIG. 4 and pieces of time series data collected after the data gap durations occur in the non-target devices 200-2, ..., and 200_N of FIG. 4. In the present embodiment, the data gap estimation apparatus 100 may apply an artificial intelligence algorithm to generate the estimated data regarding the data gap duration occurring in the target device 200_1 of FIG. 4.

Artificial intelligence (AI) may refer to a field of computer engineering and information technology that studies a method of enabling a computer to think, learn, self-develop, and the like in ways that may be done by human intelligence and may indicate enabling the computer to imitate a human intelligent behavior.

In addition, the Al may not be present in itself, but may have many direct and indirect relationships with other fields of computer science. In particular, in modern times, attempts to introduce Al elements in various fields of information technology and use the Al elements to solve problems in the fields have been made significantly actively.

Machine learning may refer to a field of AI and may include a field of research that gives a computer an ability to learn without an explicit program. In detail, machine learning may refer to a technology that studies and builds a system and an algorithm that learn, perform prediction, and improve performance thereof on the basis of empirical data. Algorithms in machine learning may use a method of building a particular model to derive predictions or determinations on the basis of input data, rather than performing strictly determined static program instructions. Representative techniques of machine learning may include a decision-making tree, a Bayesian network, a support vector machine (SVM), an artificial neural network (ANN), and the like.

The ANN may refer to a network of neurons (nodes) having a multilayer structure in which each layer extracts and processes features of complex data. The network of neurons may process data through various learning methods such as supervised learning, unsupervised learning, semi-supervised learning, and reinforcement learning. The supervised learning may work on data with clear labels, and the unsupervised learning may discover a hidden structure in data without labels. The semi-supervised learning may use data with some labels, and the reinforcement learning may learn through rewards to make optimal decisions within a given environment.

In the learning process, the performance of the ANN may be determined by several hyperparameters and optimization algorithms. The hyperparameters may include a learning rate, a batch size, the number of epochs, and the like, and various optimization algorithms, such as gradient descent, stochastic gradient descent, a momentum-based method, and Adam, may be applied. The optimization techniques may efficiently adjust a training process for a model by minimizing a value of a loss function.

The ANN may be used in various application fields such as speech recognition, image analysis, and natural language processing due to an ability to recognize and process complex features of the input data. In particular, deep learning may provide an ability to learn more sophisticated and complex data patterns by extending a concept of an ANN to use a deeper network structure. The advanced abilities described herein may establish an ANN as a central technology in machine learning and artificial intelligence.

The data gap estimation apparatus 100 is configured to provide the target device 200_1 of FIG. 4 with the result of generating the estimated data regarding the data gap duration. Subsequently, the target device 200_1 of FIG. 4 may use the estimated data regarding the data gap duration to predict a state of charge (SOC) and a state of health (SOH) of a battery.

The plurality of devices 200 (200_1, ..., and 200_N) may refer to devices using batteries as power sources and may include, for example, an electric vehicle 200_1, a drone 200_2, and an energy storage system (ESS) 200_3.

The electric vehicle 200_1 may primarily provide power by using a lithium ion battery. A battery provided in the electric vehicle 200_1 may provide a high energy density and a long-term charging cycle capability. A BMS 210_1 of FIG. 3 provided in the electric vehicle 200_1 may allow the vehicle (the electric vehicle 200_1) to maintain an optimal operating condition by continuously monitoring the SOC, a temperature, a voltage, and the like of the battery. A communication module 220_1 of FIG. 3 provided in the electric vehicle 200_1 may transmit the result of monitoring the battery by the BMS 210_1 of FIG. 3 to the data gap estimation apparatus 100.

The drone 200_2 and 200_N-1 may use a high-density lithium polymer (LiPo) battery for weight lightening. A battery provided in the drone 200_2 may support a fast discharge speed to exhibit high output within a short time. A BMS 210_2 of FIG. 4 provided in the drone 200_2 and 200_N-1 may significantly operate to allow the drone 200_2 and 200_N-1 to stably fly by thoroughly monitoring a temperature and a voltage of the battery during flight. A communication module 220_2 and 220_N-1 of FIG. 4 provided in the drone 200_2 and 200_N-1 may transmit the result of monitoring the battery by the BMS 200_2 and 200_N-1 of FIG. 4 to the data gap estimation apparatus 100.

The ESS 200_N may perform a function of storing large scale power and supplying the stored power to a power grid as needed. Various types of batteries, such as a lithium ion battery, a lead-acid battery, and a flow battery, may be used as a battery provided in the ESS 200_N and each may be optimized for a particular use purpose and environment. A BMS 210_N of FIG. 3 provided in the ESS 200_N may monitor an SOC, an SOH, a temperature, a voltage, and the like of the battery to optimize and manage efficiency and safety of the ESS 200_3. A communication module 220_N of FIG. 3 provided in the ESS 200_N may transmit the result of monitoring the battery by the BMS 210_N of FIG. 3 to the data gap estimation apparatus 100.

In the present embodiment, the plurality of devices 200 are illustrated as the electric vehicle 200_1, the drone 200_2, and the ESS 200_3, but the disclosure is not limited thereto, and all devices using batteries as power sources should be construed as falling within the scope of the disclosure.

The network 300 may operate to connect the data gap estimation apparatus 100 to the plurality of devices 200. The network 300 may include, for example, a wired network such as a local area network (LAN), a wide area network (WAN), a metropolitan area network (MAN), or an integrated service digital network (ISDN), and a wireless LAN (WLAN), code-division multiple access (CDMA), satellite communication, but the scope of the disclosure is not limited thereto. In addition, the network 300 may transmit and receive information by using short-range communication and/or long-range communication. Here, the short-range communication may include Bluetooth, radio frequency identification (RFID), infrared data association (IrDA), ultra-wideband (UWB), ZigBee, and Wi-Fi technologies, and the long-range communication may include CDMA, frequency-division multiple access (FDMA), time-division multiple access (TDMA), orthogonal frequency-division multiple access (OFDMA), and single carrier frequency-division multiple access (SC-FDMA) technologies.

The network 300 may include a connection of network elements such as a hub, a bridge, a router, and a switch. The network 300 may include one or more connected networks, i.e., a multi-network environment, including a public network such as the Internet and a private network such as a secure corporate private network. Access to the network 300 may be provided via one or more wired or wireless access networks.

In addition, the network 300 may support controller area network (CAN) communication, vehicle to infrastructure (V2I) communication, vehicle to everything (V2X) communication, and wireless access in vehicular environment (WAVE) communication technologies, and an Internet of Things (IoT) network and/or 5G communication that exchange and process information between distributed components such as objects.

A BMS 210 of FIG. 3 included in any one device from among the plurality of devices 200 may collect time series data related to a battery and use the time series data to predict an SOC and an SOH of the battery. However, when updating firmware of the BMS 210, in the case where an unexpected issue occurs, such as a failure occurring in a communication device and a BMS, time series data may be missing in a random time period and thus a data gap duration may occur. The data gap duration may negatively affect accuracy of prediction of an SOC and an SOH of a battery.

Accordingly, the data gap estimation apparatus 100 is configured to generate the estimated data regarding the data gap duration occurring in the target device 200_1 of FIG. 4 on the basis of the pieces of time series data regarding the non-target devices 200_2, ..., and 200_N of FIG. 4. The data gap estimation apparatus 100 is configured to transmit the generated estimated data regarding the data gap duration to the target device 200_1 of FIG. 4. Subsequently, the target device 200_1 of FIG. 4 may improve the accuracy of prediction of the SOC and the SOH of the battery by using the estimated data regarding the data gap duration to predict the SOC and the SOH of the battery.

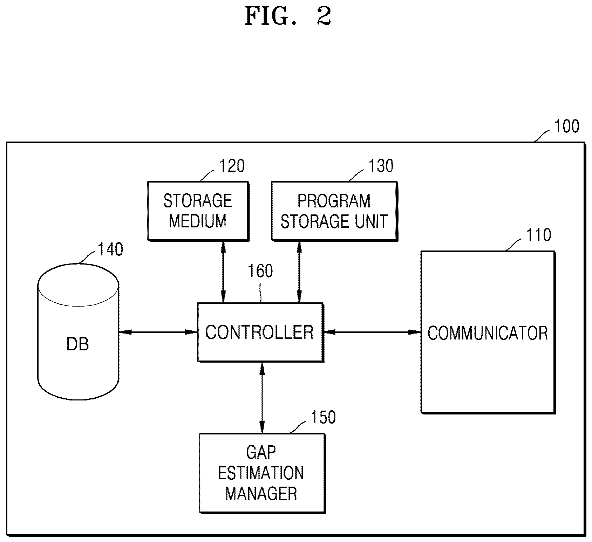

FIG. 2 illustrates components of a data gap estimation apparatus according to embodiments. In the following description, the description of the same portion of FIG. 2 as the description of FIG. 1 is omitted. Referring to FIG. 2, a data gap estimation apparatus 100 may include a communicator 110, a storage medium 120, a program storage unit 130, a database (DB) 140, a gap estimation manager 150, and a controller 160.

The communicator 110 may provide a communication interface needed to provide, in a packet data format, a signal transmitted and received between the data gap estimation apparatus 100 and the plurality of devices 200 in conjunction with the network 300. Here, the communication interface may refer to a medium that connects the data gap estimation apparatus 100 to the plurality of devices 200 and may include a path that provides a connection path so that the plurality of devices 200 may transmit and receive information after connecting to the data gap estimation apparatus 100. In addition, the communicator 110 may refer to a device including hardware and software needed to transmit and receive a signal such as a control signal or a data signal through a wired or wireless connection to another network device.

The storage medium 120 may perform a function of temporarily or permanently storing data processed by the controller 160. Here, the storage medium 120 may include a magnetic storage medium or a flash storage medium, but the scope of the disclosure is not limited thereto. The storage medium 120 may include an internal memory and/or an external memory and may include a volatile memory such as DRAM, SRAM, or SDRAM, a nonvolatile memory such as one time programmable ROM (OTPROM), PROM, EPROM, EEPROM, mask ROM, flash ROM, NAND flash memory, or NOR flash memory, a flash drive such as a solid state drive (SSD), a compact flash (CF) card, an SD card, a micro-SD card, a mini-SD card, an xD card, or a memory stick, or a storage device such as a hard disk drive (HDD).

The program storage unit 130 may include control software that performs a task of collecting pieces of time series data related to a battery from the plurality of devices 200, a task of determining, as the target device 200_1 of FIG. 4, a device in which data is missing in a random time period and thus a data gap duration occurs, from among the plurality of devices 200, a task of generating estimated data regarding the data gap duration occurring in the target device 200_1 of FIG. 4 on the basis of pieces of time series data collected before data gap durations occur in the non-target devices 200-2, ..., and 200_N of FIG. 4 and pieces of time series data after the data gap durations occur in the non-target devices 200-2, ..., and 200_N of FIG. 4, a task of providing the target device 200_1 of FIG. 4 with the result of generating the estimated data regarding the data gap duration, and the like.

The DB 140 may store various types of information for estimating a data gap. The DB 140 may store, as time series data, information such as a current, a voltage, and a temperature of the battery sequentially recorded over time. In addition, the DB 140 may store device model information identifying each device and indicating that each device belongs to a particular manufacturer and product line. In addition, the DB 140 may store specification information regarding a battery provided in each of the plurality of devices 200. In addition, the DB 140 may store an artificial intelligence algorithm used to generate the estimated data regarding the data gap duration.

The gap estimation manager 150 may collect pieces of time series data related to a battery from the plurality of devices 200. The gap estimation manager 150 may determine, as the target device 200_1 of FIG. 4, a device in which data is missing in a random time period and thus a data gap duration occurs, from among the plurality of devices 200. The gap estimation manager 150 may generate the estimated data regarding the data gap duration occurring in the target device 200_1 of FIG. 4, on the basis of the pieces of time series data collected before the data gap durations occur in the non-target devices 200_2, ..., and 200_N of FIG. 4 and the pieces of time series data collected after the data gap durations occur in the non-target devices 200_2, ..., and 200_N of FIG. 4. The gap estimation manager 150 may provide the target device 200_1 of FIG. 4 with the result of generating the estimated data regarding the data gap duration.

The controller 160 may refer to a type of central processing unit and may control the overall operation of the data gap estimation apparatus 100 by driving the control software installed in the program storage unit 130. The controller 160 may include any type of unit that may process data, such as a processor. Here, the term "processor" may refer to, for example, a data processing unit embedded in hardware, which has a physically structured circuit to perform a function expressed by a code or command included within a program. An example of the data processing device embedded in hardware may include processing units such as a microprocessor, a central processing unit (CPU), a processor core, a multiprocessor, an application-specific integrated circuit (ASIC), and a field programmable gate array (FPGA), but the scope of the disclosure is not limited thereto.

FIGS. 3 and 4 illustrate components of a gap estimation manager and a device, according to embodiments. In the following description, the descriptions of the same portions of FIGS. 3 and 4 as the descriptions of FIG. 1 and 2 are omitted. Referring to FIGS. 3 and 4, a data gap manager 150 may include a collector 151, a determiner 152, a classifier 153, a first estimator 154, and a provider 155. In addition, the plurality of devices 200 may include a plurality of BMSs 210 (210_1, ..., and 210_N) and a plurality of communication modules 220 (220_1, ..., and 220_N).

The collector 151 may periodically collect pieces of time series data related to a battery from the plurality of devices 200. The plurality of devices 200 using batteries as power sources may transmit pieces of time series data related to batteries from the BMSs 210 (210_1, ..., and 210_N) provided therein to the collector 151.

The determiner 152 may check a log or time stamp of the time series data related to the batteries on the basis of the collection of the pieces of time series data related to the batteries to determine the target device 200_1 of FIG. 4 and the non-target devices (200_2..., and 200_N). The target device 200_1 of FIG. 4 may include, from among the plurality of devices 200 (200_1, ..., and 200_N), a device in which data is missing in a random time period and thus a data gap duration occurs. The non-target devices 200_2, ..., and 200_N may include, from among the plurality of devices 200 (200_1, ..., 200_N), devices in which data gap durations occur. The non-target devices 200_2, ..., and 200_N may also be expressed as devices excluding the target device 200_1 from among the plurality of devices 200 (200_1, ..., and 200_N).

The classifier 153 may set, as first non-target devices on the basis of the collection of the pieces of time series data, devices having the same device model as the target device 200_1 from among the plurality of devices 200. The classifier 153 may classify time series data collected from the target device 200_1 as first time series data and classify pieces of time series data collected from the first non-target devices as second time series data. In the case where the pieces of collected time series data are classified into the first time series data and the second time series data, a data gap duration, which occurs in the target device 200_1, may be detected through comparison between the first time series data and the second time series data. Here, although not illustrated, the data gap duration may be detected by a detector as an additional component or may be detected by the determiner 152.

The classifier 153 may set, as second non-target devices on the basis of the collection of the pieces of time series data, devices including batteries having the same specifications as a battery provided in the target device 200_1 from among the plurality of devices 200. The classifier 153 may classify time series data collected from the target device 200_1 as first time series data and classify time series data collected from the second non-target devices as third time series data. In the case where the pieces of collected time series data are classified into the first time series data and the third time series data, a data gap duration, which occurs in the target device 200_1, may be detected through comparison between the first time series data and the third time series data.

The classifier 153 may set, as third non-target devices on the basis of the collection of the pieces of time series data, devices having the same device model as the target device 200_1 and including batteries having the same specifications as the battery provided in the target device 200_1, from among the plurality of devices 200. The classifier 153 may classify time series data collected from the target device 200_1 as first time series data and classify time series data collected from the third non-target devices as fourth time series data. In the case where the pieces of collected time series data are classified into the first time series data and the fourth time series data, a data gap duration, which occurs in the target device 200_1, may be detected through comparison between the first time series data and the fourth time series data.

The first estimator 154 may generate estimated data regarding the data gap duration occurring in the target device 200_1 on the basis of pieces of time series data collected before data gap durations occur in the non-target devices 200_2, ..., and 200_N and pieces of time series data collected after the data gap durations occur in the non-target devices 200_2, ..., and 200_N.

The first estimator 154 may generate estimated data regarding a data gap duration corresponding to the first time series data collected before and after the data gap duration occurs in the target device 200_1, by using a first deep neural network model that is pre-trained to generate estimated data regarding data gap durations on the basis of second time series data collected before and after the data gap durations occur in first non-target devices. Here, the first deep neural network model may refer to a model trained in a supervised learning method by first training data that uses, as an input, second time series data collected before and after data gap durations occur in first non-target devices including devices having the same device model as the target device 200_1 from among the plurality of devices 200 and uses, as labels, estimated data regarding the data gap durations occurring in the first non-target devices.

The first estimator 154 may generate estimated data regarding a data gap duration corresponding to first time series data collected before and after the data gap duration occurs in the target device 200_1, by using a second deep neural network model that is pre-trained to generate estimated data regarding data gap durations on the basis of third time series data collected before and after the data gap durations occur in second non-target devices. Here, the second deep neural network model may refer to a model trained in a supervised learning method by second training data that uses, as an input, third time series data collected before and after data gap durations occur in second non-target devices including devices including batteries having the same specifications as the battery provided in the target device 200_1 from among the plurality of devices 200 and uses, as labels, the estimated data regarding the data gap durations occurring in the second non-target devices.

The first estimator 154 may generate estimated data in a data gap duration corresponding to first time series data collected before and after the data gap duration occurs in the target device 200_1, by using a third deep neural network model that is pre-trained to generate estimated data regarding data gap durations on the basis of fourth time series data collected before and after the data gap durations occur in third non-target devices. Here, the third deep neural network model may refer to a model trained in a supervised learning method by third training data that uses, as an input, fourth time series data collected before and after data gap durations occur in third non-target devices having the same device model as the target device 200_1 and including devices including batteries having the same specifications as the battery provided in the target device 200_1 from among the plurality of devices 200 and uses, as labels, estimated data regarding the data gap durations occurring in the third non-target devices.

The first estimator 154 may train, in a supervised learning method, the first deep neural network model, the second deep neural network model, and the third deep neural network model which are initially set by using the labeled training data. Here, the first deep neural network model, the second deep neural network model, the third deep neural network model, which are initially set, may refer to initial models designed to be configured as models that may generate estimated data regarding a data gap duration occurring in the target device 200_1 by using the pieces of time series data collected from the non-target devices 200_2, ..., and 200_N and may have parameter values that are set as random initial values. The initial models may be trained via the pieces of training data described herein and thus the parameter values thereof may be optimized to be completed as models that accurately generate the estimated data regarding the data gap duration occurring in the target device 200_1.

In the present embodiment, the first estimator 154 may focus on a situation in which a data gap duration is detected with respect to time series data including one or more of a voltage, a current, and a temperature and estimated data regarding the detected data gap duration is generated. The time series data including one or more of a voltage, a current, and a temperature may be needed to estimate significant performance metrics such as an SOC of a battery. The case where a gap occurs in SOC data regarding the battery in the target device 200_1 may include the case where a gap occurs in data including one or more of a voltage, a current, and a temperature for estimating the SOC of the battery.

In the herein case, the first estimator 154 may generate the estimated data by using an approach method referred to as a stacking model. The stacking model may include a technique for sequentially combining several machine learning models to use an output of one model as an input into a next model. For example, a first model (a model A) may generate voltage estimated data regarding a data gap duration and use the generated voltage estimated data as an input into a second model (a model B) to generate the result of estimating an SOC of a battery. According to the herein method, a data gap may be effectively supplemented and at the same time, the overall state of a battery may be more accurately predicted. The stacking model may combine various models to improve prediction accuracy at each phase.

The provider 155 may provide the target device 200_1 of FIG. 4 with the result of generating the estimated data regarding the data gap duration. The communication module 220_1 of the target device 200_1 of FIG. 4 may transmit, to the BMS 210_1, the result of generating the estimated data regarding the data gap duration. A second estimator 211-1 may estimate an SOC and an SOH of a battery by using the result of generating the estimated data regarding the data gap duration. A DB 212_1 may store the result of generating the estimated data regarding the data gap duration and the result of estimating the SOC and the SOH of the battery.

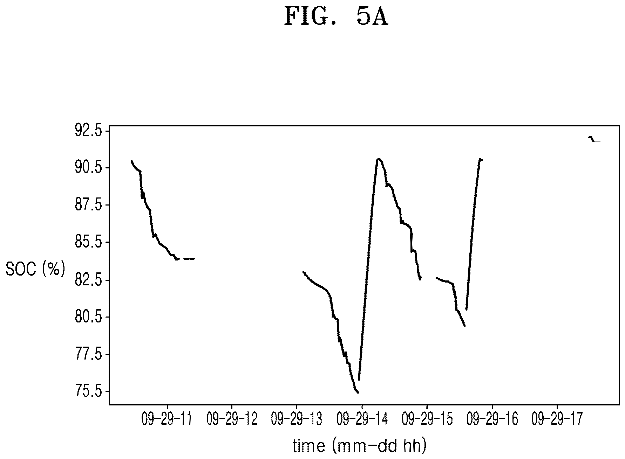

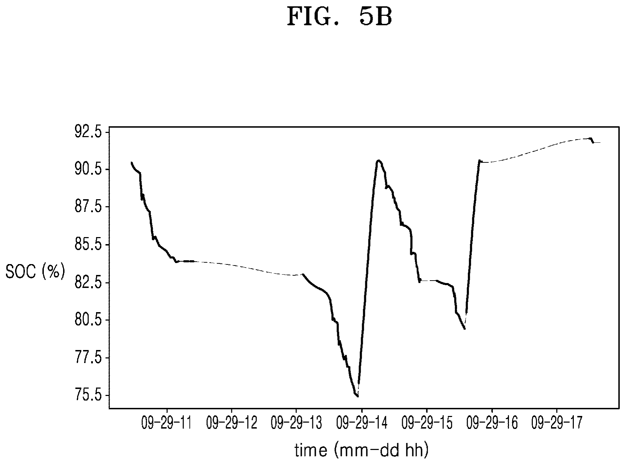

FIGS. 5A and 5B illustrate a waveform diagram of a data gap duration and a waveform diagram reflecting the result of generating estimated data regarding the data gap duration, according to embodiments.

FIG. 5A illustrates, for example, that the BMS 210_1 provided in the target device 200_1 fails to collect one or more of pieces of battery-related data from among a current, a voltage, and a temperature and thus a gap occurs in estimation of an SOC of a battery.

Battery-related data regarding the target device 200_1 that is in actual operation may have greatly many variables. Various variables such as a temperature due to weather, and a user habit may allow a data gap duration not to be easily estimated. For example, in the case where a data gap duration occurs for a month in the target device 200_1, various variables such as weather at that time, a driving mileage for that period, and a driving habit may be present. To minimize the variables, the data gap estimation apparatus 100 may first perform a task of classifying time series data having the same device model and/or the same battery specifications. Subsequently, the data gap estimation apparatus 100 may train a deep neural network model by using, as an input, pieces of time series data collected before the data gap duration occurs and pieces of time series data collected after the data gap duration occurs and randomly create a data gap duration to generate estimated data regarding the corresponding duration. The data gap estimation apparatus 100 may transmit the estimated data regarding the data gap duration to the target device 200_1 again.

FIG. 5B illustrates the result of predicting an SOC of a battery by using the result of generating estimated data regarding a data gap duration, which is received from the data gap estimation apparatus 100. As described herein, a data gap issue of the BMS 210_1 provided in the target device 200_1 may be effectively resolved to help the BMS 210_1 accurately predict an SOC and an SOH of a battery.

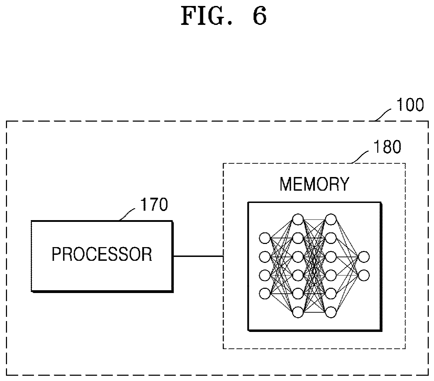

FIG. 6 illustrates components of a data gap estimation apparatus according to embodiments. In the following description, the descriptions of the same portions of FIG. 6 as the descriptions of FIGS. 1 to 5 are omitted. Referring to FIG. 6, a data gap estimation apparatus 100 according to embodiments may include a processor 170 and a memory 180.

In the present embodiment, the processor 170 may process functions performed by the communicator 110, the storage medium 120, the program storage unit 130, the DB 140, the gap estimation manager 150, and the controller 160 described with reference to FIGS. 2 and 3.

The processor 170 may process commands of a computer program by performing basic arithmetic, logic, and input/output operations. Here, the commands may be provided from one or more of the program storage unit 130, the DB 140, and the controller 160. In some embodiments, the processor 170 may control the overall operations of other components linked to the data gap estimation apparatus 100.

In some embodiments, the processor 170 may perform at least some of data analysis, processing, and result information generation for performing the herein-described operations by using at least one of machine learning, neural network, or deep learning algorithms as rule-based or artificial intelligence algorithms. An example of the neural network may include a model such as a convolutional neural network (CNN), a deep neural network (DNN), or a recurrent neural network (RNN).

For example, the processor 170 may be implemented as an array of a plurality of logical gates, or as a combination of a general-purpose microprocessor and a memory that stores a program that may be executed on the microprocessor. For example, the processor 170 may include a general-purpose processor, a CPU, a microprocessor, a digital signal processor (DSP), a controller, a microcontroller, a state machine, or the like. In some environments, the processor 170 may also include an ASIC, a programmable logic device (PLD), a field programmable gate array (FPGA), or the like. For example, the processor 170 may refer to a combination of processing devices such as a combination of a DSP and a microprocessor, a combination of a plurality of microprocessors, a combination of one or more microprocessors combined with a DSP core, or any other combination of the components.

The memory 180 may be operatively connected to the processor 170 and may store at least one code in association with an operation performed by the processor 170.

In some embodiments, the memory 180 may perform a function of temporarily or permanently storing data processed by the processor 170 and may include data constructed as the DB 140. Here, the memory 180 may include a magnetic storage medium or a flash storage medium, but the scope of the disclosure is not limited thereto. The memory 180 may include an internal memory and/or an external memory, and may include a volatile memory such as DRAM, SRAM, or SDRAM, a nonvolatile memory such as OTPROM, PROM, EPROM, EEPROM, mask ROM, flash ROM, NAND flash memory, or NOR flash memory, a flash drive such as an SSD, a CF card, an SD card, a micro-SD card, a mini-SD card, an xD card, or memory stick, or a storage device such as an HDD.

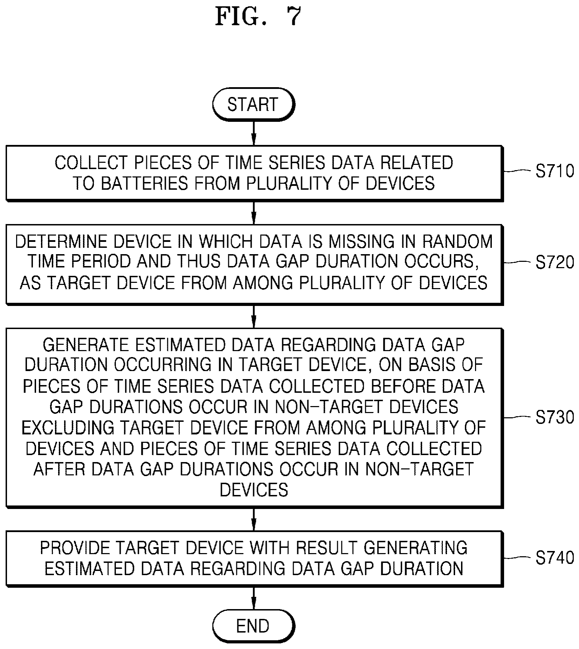

FIG. 7 is a flowchart illustrating a data gap estimation method according to embodiments. In the following description, the descriptions of the same portions of FIG. 7 as the descriptions of FIGS. 1 to 6 are omitted. The data gap estimation method according to the present embodiment is described as being performed by the processor 170 with the help of peripheral components.

In operation S710, the processor 170 collects pieces of time series data related to batteries from the BMSs 210 (210_1, ..., and 210_N) that are provided in the plurality of devices 200 using batteries as power sources and monitor states of the batteries.

In operation S720, the processor 170 determines, as the target device 200_1 on the basis of the collection of the pieces of time series data, a device in which data is missing in a random time period and thus a data gap duration occurs, from among the plurality of devices 200. The processor 170 may determine devices excluding the target device 200_1 from among the plurality of devices 200 (200_1, ..., and 200_N) as the non-target devices 200_2, ..., and 200_N.

In operation S730, the processor 170 generates estimated data regarding the data gap duration occurring in the target device 200_1 on the basis of pieces of time series data collected before data gap durations occur in the non-target devices 200_2, ..., and 200_N and pieces of time series data collected after the data gap durations occur in the non-target devices 200_2, ..., and 200_N.

In operation S740, the processor 170 provides the target device 200_1 with the result of generating the estimated data regarding the data gap duration.

In the present embodiment, the processor 170 may set devices having the same device model as the target device 200_1 from among the plurality of devices 200 as first non-target devices on the basis of collection of pieces of time series data before generating estimated data regarding a data gap duration. The processor 170 may classify time series data collected from the target device 200_1 as first time series data and classify pieces of time series data collected from the first non-target devices as second time series data. The processor 170 may detect a data gap duration occurring in the target device 200_1 through comparison between the first time series data and the second time series data. When generating the estimated data regarding the data gap duration, the processor 170 may generate the estimated data regarding the data gap duration corresponding to the first time series data collected before and after the data gap duration occurs in the target device 200_1, by using a first deep neural network model that is pre-trained to generate estimated data regarding data gap durations on the basis of second time series data collected before and after the data gap durations occurs in first non-target devices. Here, the first deep neural network model may refer to as a model trained in a supervised learning method by first training data that uses, as an input, the second time series data collected before and after the data gap durations occur in the first non-target devices including devices having the same device model as the target device 200_1 from among the plurality of devices 200 and uses, as labels, estimated data regarding the data gap durations occurring in the first non-target devices.

In the present embodiment, before generating the estimated data regarding the data gap duration, the processor 170 may set, as second non-target devices, devices including batteries having the same specifications as a battery provided in the target device 200_1 from among the plurality of devices 200. On the basis of pieces of time series data collected from the plurality of devices 200, the processor 170 may classify time series data collected from the target device 200_1 as first time series data and classify pieces of time series data collected from the second non-target devices as third time series data. The processor 170 may detect a data gap duration occurring in the target device 200_1 through comparison between the first time series data and the third time series data. When generating estimated data regarding the data gap duration, the processor 170 may generate the estimated data regarding the data gap duration corresponding to the first time series data collected before and after the data gap duration occurs in the target device 200_1, by using a second deep neural network model that is pre-trained to generate estimated data regarding data gap durations on the basis of third time series data collected before and after the data gap durations occur in second non-target devices. Here, the second deep neural network model may refer to a model trained in a supervised learning method by second training data that uses, as an input, third time series data collected before and after data gap durations occur in second non-target devices including devices including batteries having the same specifications as the battery provided in the target device 200_1 from among the plurality of devices 200 and uses, as labels, the estimated data regarding the data gap durations occurring in the second non-target devices.

In the present embodiment, before generating the estimated data regarding the data gap duration, the processor 170 may set, as third non-target devices, devices having the same device model as the target device 200_1 from among the plurality of devices 200 and including batteries having the same specifications as the battery provided in the target device 200_1. On the basis of pieces of time series data collected from the plurality of devices 200, the processor 170 may classify time series data collected from the target device 200_1 as first time series data and classify pieces of time series data collected from the third non-target devices as fourth time series data. The processor 170 may detect a data gap duration occurring in the target device 200_1 through comparison between the first time series data and the fourth time series data. When generating the estimated data regarding the data gap duration, the processor 170 may generate the estimated data regarding the data gap duration corresponding to the first time series data collected before and after the data gap duration occurs in the target device 200_1, by using a third deep neural network model that is pre-trained to generate estimated data regarding data gap durations on the basis of fourth time series data collected before and after the data gap durations occur in third non-target devices. Here, the third deep neural network model may refer to a model trained in a supervised learning method by third training data that uses, as an input, fourth time series data collected before and after data gap durations occur in third non-target devices having the same device model as the target device 200_1 from among the plurality of devices 200 and including devices including batteries having the same specifications as the battery provided in the target device 200_1 and uses, as labels, estimated data regarding the data gap durations occurring in the third non-target devices.

According to the disclosure, accuracy of prediction of an SOC and an SOH of a battery may be improved by effectively resolving a data gap issue of a BMS.

Performance and stability of a battery-dependent device may be ensured, and the overall user experience may be improved by providing more reliable battery-related information to a user.

However, the effects obtainable by the disclosure are not limited to the effects described herein, and other technical effects not mentioned may be clearly understood by those skilled in the art from the description of the disclosure described herein.

According to the disclosure, accuracy of prediction of an SOC and an SOH of a battery may be improved by effectively resolving a data gap issue of a BMS.

Performance and stability of a battery-dependent device may be ensured, and the overall user experience may be improved by providing more reliable battery-related information to a user.

Although the disclosure has been described herein with reference to limited embodiments and drawings, the disclosure is not limited thereto, and various modifications and changes may be made within the scope of the disclosure and the equivalent scope of claims described herein by those skilled in the art to which the disclosure pertains.

## Claims

1. A method of estimating a data gap, which is performed by a processor (170) of an apparatus (150) for estimating the data gap, the method comprising:
collecting pieces of time series data related to batteries from battery management systems (210) which are provided in a plurality of devices (200) using the batteries as power sources and which monitor states of the batteries;
on a basis of the collection of the pieces of time series data, determining a device in which data is missing in a random time period and thus a data gap duration occurs, as a target device (200_1) from among the plurality of devices (200);
generating estimated data regarding the data gap duration occurring in the target device (200_1), on a basis of pieces of time series data collected before the data gap duration occurs in non-target devices (200_2 - 200_N) excluding the target device (200_1) from among the plurality of devices (200) and pieces of time series data collected after the data gap duration occurs; and
providing the target device (200_1) with a result of generating the estimated data regarding the data gap duration.

2. The method of claim 1, further comprising:
before generating the estimated data regarding the data gap duration, on the basis of the collection of the pieces of time series data, setting, as first non-target devices, devices (200) having a same device model as the target device (200_1) from among the plurality of devices (200); and
classifying time series data collected from the target device (200_1) as first time series data and classifying pieces of time series data collected from the first non-target devices as second time series data.

3. The method of claim 2, further comprising detecting the data gap duration occurring in the target device (200_1) through comparison between the first time series data and the second time series data.

4. The method of claim 3, wherein the generating the estimated data regarding the data gap duration comprises generating estimated data regarding a data gap duration corresponding to first time series data collected before and after the data gap duration occurs in the target device (200_1), by using a first deep neural network model pre-trained to generate estimated data regarding data gap durations on a basis of second time series data collected before and after the data gap durations occur in first non-target devices, and the first deep neural network model comprises a model trained in a supervised learning method by first training data, wherein the first training data uses, as an input, second time series data collected before and after data gap durations occur in first non-target devices comprising devices (200) having a same device model as a target device (200_1) from among a plurality of devices (200) and uses, as labels, estimated data regarding the data gap durations occurring in the first non-target devices.

5. The method of any one of claims 1 to 4, further comprising:
before generating the estimated data regarding the data gap duration, setting, as second non-target devices, devices comprising batteries having same specifications as a battery provided in the target device from among the plurality of devices (200); and
on the basis of pieces of time series data collected from the plurality of devices (200), classifying time series data collected from the target device (200_1) as first time series data and classifying pieces of time series data collected from the second non-target devices as third time series data.

6. The method of claim 5, further comprising detecting a data gap duration occurring in the target device (200_1) through comparison between the first time series data and the third time series data.

7. The method of claim 6, wherein generating the estimated data regarding the data gap duration comprises generating estimated data regarding a data gap duration corresponding to first time series data collected before and after the data gap duration occurs in the target device (200_1), by using a second deep neural network model pre-trained to generate estimated data regarding data gap durations on the basis of third time series data collected before and after the data gap durations occur in second non-target devices, and the second deep neural network model comprises a model trained in a supervised learning method by second training data, wherein the second training data uses, as an input, third time series data collected before and after data gap durations occur in second non-target devices comprising devices comprising batteries having same specifications as a battery provided in a target device (200_1) from among a plurality of devices (200) and uses, as labels, estimated data regarding the data gap durations occurring in the second non-target devices.

8. The method of anyone of claims 1 to 7, further comprising:
before generating the estimated data regarding the data gap duration, setting, as third non-target devices, devices having a same device model as the target device (200_1) from among the plurality of devices (200) and comprising batteries having as same specifications as a battery provided in the target device (200_1); and
on the basis of pieces of time series data collected from the plurality of devices (200), classifying time series data collected from the target device (200_1) as first time series data and classifying pieces of time series data collected from the third non-target devices as fourth time series data.

9. The method of claim 8, further comprising detecting a data gap duration occurring in the target device (200_1) through comparison between the first time series data and the fourth time series data.

10. The method of claim 9, wherein generating the estimated data regarding the data gap duration comprises generating estimated data regarding a data gap duration corresponding to first time series data collected before and after the data gap duration occurs in the target device (200_1), by using a third deep neural network model pre-trained to generate estimated data regarding data gap durations on the basis of fourth time series data collected before and after the data gap durations occur in third non-target devices, and the third deep neural network model comprises a model trained in a supervised learning method by third training data, wherein the third training data uses, as an input, fourth time series data collected before and after data gap durations occur in third non-target devices comprising devices having a same device model as a target device (200_1) from among a plurality of devices (200) and comprising batteries having same specifications as a battery provided in the target device (200_1) and uses, as labels, estimated data regarding the data gap durations occurring in the third non-target devices.

11. An apparatus for estimating a data gap, the apparatus comprising:
one or more processors (170); and
a memory (180) operatively connected to the one or more processors (170) and storing at least one code executed by the processors (170), wherein the one or more processors (170) are configured to:
collect pieces of time series data related to batteries from battery management systems (210) which are provided in a plurality of devices (200) using the batteries as power sources and which monitor states of the batteries;
on a basis of the collection of the pieces of time series data, determine a device in which data is missing in a random time period and thus a data gap duration occurs, as a target device (200_1) from among the plurality of devices (200);
generate estimated data regarding the data gap duration occurring in the target device (200_1), on a basis of pieces of time series data collected before the data gap duration occurs in non-target devices excluding the target device (200_1) from among the plurality of devices (200) and pieces of time series data collected after the data gap duration occurs; and
provide the target device (200_1) with a result of generating the estimated data regarding the data gap duration.

12. The apparatus of claim 11, wherein the one or more processors (170) are further configured to:
before generating the estimated data regarding the data gap duration, on a basis of the collection of the pieces of time series data, set devices having a same device model as the target device (200_1) as first non-target devices from among the plurality of devices (200); and
classify time series data collected from the target device (200_1) as first time series data and classify time series data collected from the first non-target devices as second time series data.

13. The apparatus of claim 12, wherein the one or more processors (170) are further configured to detect a data gap duration occurring in the target device (200_1) through comparison between the first time series data and the second time series data.

14. The apparatus of claim 13, wherein the one or more processors (170) are further configured to, to generate the estimated data regarding the data gap duration, generate estimated data regarding a data gap duration corresponding first time series data collected before and after the data gap duration occurs in the target device (200_1), by using a first deep neural network model pre-trained to generate estimated data regarding data gap durations on the basis of second time series data collected before and after the data gap durations occur in first non-target devices, and the first deep neural network model comprises a model trained in a supervised learning method by first training data, wherein the first training data uses, as an input, second time series data collected before and after data gap durations occur in first non-target devices comprising devices having a same device model as a target device (200_1) from among a plurality of devices (200) and uses, as labels, estimated data regarding the data gap durations occurring in the first non-target devices.

15. The apparatus of any one of claims 11 to 14, wherein the one or more processors (170) are further configured to:
before generating the estimated data regarding the data gap duration, set devices comprising batteries having same specifications as a battery provided in the target device (200_1) as second non-target devices from among the plurality of devices (200); and
on the basis of pieces of time series data collected from the plurality of devices (200), classifying time series data collected from the target device (200_1) as first time series data and classifying time series data collected from the second non-target devices as third time series data.
